# EUROPÄISCHE PATENTSCHRIFT

(11) **EP 4 003 583 B1**
(45) Veröffentlichungstag und Bekanntmachung des Hinweises auf die Patenterteilung: **05.04.2023**
(21) Anmeldenummer: 20739326.5
(22) Anmeldetag: 08.07.2020
(51) Int. Cl.: B01J 8/00

(54) **DEMONTIERBARES UND ZERLEGBARES BELADUNGSSYSTEM ZUM BELADEN EINES REAKTORS MIT SCHÜTTGUT**
LOADING SYSTEM FOR LOADING A REACTOR WITH BULK MATERIAL, WHICH SYSTEM CAN BE DISASSEMBLED AND DISMANTLED
SYSTÈME DE CHARGEMENT DÉMONTABLE ET DISSOCIABLE POUR LE CHARGEMENT D'UN RÉACTEUR AVEC DES PRODUITS EN VRAC

(30) Priorität: 24.07.2019 DE 102019120014
(43) Veröffentlichungstag der Anmeldung: 01.06.2022
(73) Patentinhaber: Clariant International Ltd, 4132 Muttenz (CH)
(72) Erfinder: MAIER, Stefan, 85567 Grafing (DE); WERNER, Sebastian, 85591 Vaterstetten (DE); DIEKMANN, Ebbe, Juul, 81925 München (DE)
(74) Vertreter: Klingelhöfer, Stefan
(86) Internationale Anmeldenummer: PCT/EP2020/069215
(87) Internationale Veröffentlichungsnummer: WO 2021/013543

(56) Entgegenhaltungen:
- WO-A1-90/07371
- WO-A1-98/02238
- DE-U1-202008 004 922
- US-A- 5 890 868

## Beschreibung

Die Füllung von Reaktoren mit Schüttgut, beispielsweise Katalysatormaterial, Ausgangsverbindungen für die Synthese oder Absorbermaterial ist häufig ein zeitaufwändiger Ladevorgang. Das Schüttgut muss unter teilweise beengten Verhältnissen durch kleine Öffnungen in der Reaktorwand ins Innere des Reaktors eingebracht und danach im Reaktorraum verteilt werden.

Häufig wird das Schüttgut in einen sogenannten "Hopper" geladen und durch eine kleine Öffnung in der Reaktorwand, das sogenannte Mannloch, am Kopf des Reaktors in den Reaktorinnenraum gebracht. Danach muss das Schüttgut umständlich im Transporteimer verladen und in unterschiedlichen Bereichen des Reaktorinnenraums möglichst gleichmäßig verteilt werden. Dabei stören die beengten Verhältnisse im Reaktorinnenraum, die eine gleichmäßige Verteilung des Schüttguts im Reaktorraum behindern.

Aus der WO 90/07371 A1 ist ein Reaktor zum Abtrennen unerwünschter Bestandteile aus einem Abgas bekannt, wobei das Absorbermaterial während des Betriebs des Reaktors über Loren, die auf einen Schienenkranz laufen im Reaktor verteilt werden kann. Die Loren des permanent installierten Schienenkranz-Systems werden durch Beschickungsöffnungen im Reaktor, die einen luftdicht verschließbaren Laderaum zusammen mit einem Gebläse zur Druckbeaufschlagung enthalten, mit neuem Absorbermaterial versorgt. Diese Beschickungsöffnungen sind technisch sehr aufwändig und sollen verhindern, dass Rauchgas aus dem Reaktor in die Umgebungsatmosphäre austreten kann. WO98/02238 offenbart eine Vorrichtung zur Beladung mit einem Schienensystem.

Die Aufgabe der vorliegenden Erfindung besteht darin, ein Beladungssystem und ein Verfahren zum Beladen eines Reaktors unter Verwendung des Beladungssystems zur Verfügung zu stellen, das bezüglich der oben genannten Nachteile verbessert ist.

Diese Aufgabe wird gelöst durch ein demontierbares und zerlegbares Beladungssystem nach Anspruch 1. Weitere vorteilhafte Ausgestaltungen des Beladungssystems sowie ein Verfahren zum Beladen eines Reaktors unter Verwendung des Beladungssystems sind Gegenstand weiterer Ansprüche.

Gegenstand der vorliegenden Erfindung ist ein demontierbares und zerlegbares Beladungssystem zum Beladen eines Reaktors mit Schüttgut, umfassend:
(a) ein zerlegbares Schienensystem mit einer Vielzahl von Schienensegmenten, die miteinander zu einem in sich geschlossenen Schienensystem verbunden werden können, wobei die einzelnen Schienensegmente Befestigungsmittel zum Verbinden der Schienensegmente miteinander aufweisen,
(b) zumindest ein Schienenfahrzeug zum Betrieb auf dem Schienensystem mit einer Haltevorrichtung für Behälter zur Aufnahme des Schüttguts, und
(c) mindestens einer Füllstation zur Aufnahme des Schüttguts mit einem im Boden der Füllstation vorhandenen Schlauch zum Transport des Schüttguts in verschiedene Bereiche des Reaktors.

Der Vorteil des erfindungsgemäßen Beladungssystems besteht darin, dass dieses Beladungssystem demontierbar und zerlegbar ist und somit auch unter den beengten Verhältnissen im Reaktorinnenraum im zerlegten Zustand ohne allzu großen Aufwand in den Reaktorinnenraum transportiert und erst danach zu dem geschlossenen Schienensystem montiert werden kann. Das Schienensystem mit dem zumindest einem Schienenfahrzeug erlaubt es auch besonders einfach, das Schüttgut auf dem Schienenfahrzeug schnell und zuverlässig in verschiedene Bereiche des Reaktorinnenraums zu transportieren. Diese Bereiche können auch weiter entfernt sein von einem Mannloch, durch das das Schüttgut in den Reaktorraum eingebracht wird. Die mindestens eine vorhandene Füllstation zur Aufnahme des Schüttguts mit jeweils einem in dem Boden vorhandenen Schlauch ermöglicht es auch in beengten Verhältnissen das Schüttgut mittels des Schlauchs im Reaktorinnenraum zuverlässig zu verteilen. Der Schlauch bremst weiterhin das Schüttgut beim Durchrutschen ab und verringert so Beschädigungen am Schüttgut.

Bevorzugt kann das Schienensystem auch Bügel zur Montage im Reaktor aufweisen. Die Bügel können es beispielsweise erlauben, das Schienensystem zuverlässig auf gegebenenfalls vorhandenen Befestigungsmöglichkeiten im Reaktorinnenraum aufzubringen und dort zu montieren, ohne dass es dazu kommt, dass sich das Schienensystem während des Transports des Schüttguts verschiebt. Alternativ ist es auch möglich, dass das Schienensystem lediglich auf die Rohrsysteme gelegt wird und aufgrund seines Eigengewichts während des Betriebs positionsstabil bleibt.

Das in sich geschlossene Schienensystem kann verschiedenste Formen einnehmen, die durch den zur Verfügung stehenden Platz im Reaktorinnenraum definiert werden. Beispielsweise kann das in sich geschlossene Schienensystem kreisförmig, oval oder als Kombination beider Formen ausgestaltet sein, um mögliche Hindernisse im Reaktor zu umgehen.

Weiterhin können die Schienensegmente Markierungen zum Zusammenbau des Schienensystems aufweisen. Insbesondere können an den Enden der einzelnen Schienensegmente Markierungen vorhanden sein die für miteinander zu verbindende Enden von zwei Schienensegmenten jeweils übereinstimmen. Dies können beispielsweise Farbmarkierungen und/oder Zahlenmarkierungen sein. Derartige Markierungen erlauben es zuverlässig zueinander gehörende Schienensegmente während der Montage des geschlossenen Schienensystems aufzufinden und richtig zu montieren.

Die verschiedenen Schienensegmente werden vorteilhafterweise ineinandergesteckt und verschraubt. Dieses Steck-System erlaubt eine einfache Montage und Demontage des Schienensystems unter beengten Bedingungen.

Gemäß einer weiteren Ausführungsform eines erfindungsgemäßen Beladungssystems können eine Vielzahl der Füllstationen und auch eine Vielzahl von Behältern vorhanden sein, wobei Markierungen zur Kennzeichnung jeweils einer Füllstation und zumindest einem, der Füllstation zugeordneten Behälter vorhanden sind.

Um eine gleichmäßige Beladung des Reaktorinnenraums zu gewährleisten, kann die Vielzahl der Füllstationen gleichmäßig im Reaktorinnenraum verteilt werden und den Füllstationen jeweils zumindest ein Behälter über entsprechende Markierungen zugeordnet werden. Dies ermöglicht es, auch in beengten Verhältnissen unter möglichweise schlechten Lichtverhältnissen das Schüttgut zuverlässig im Reaktorinnenraum gleichmäßig zu verteilen. Die Markierungen können beispielsweise Farbmarkierungen oder Zahlenmarkierungen, bzw. eine Kombination aus Farbmarkierungen und Zahlenmarkierungen sein. Weiterhin können einer Füllstation jeweils mehrere Behälter zugeordnet werden, wobei dann die Markierungen auch zuverlässig eine Zuordnung von mehreren Behältern zu einer Füllstation ermöglichen.

Weiterhin kann das Beladungssystem eine Vielzahl von Schienenfahrzeugen zum gleichzeitigen Betrieb auf dem Schienensystem umfassen. Dies ermöglicht es besonders einfach und zeitsparend, gleichzeitig verschiedene Behälter mit dem Schüttgut über das Schienensystem in verschiedene Bereiche des Reaktorinnenraums zu transportieren. Die Schienenfahrzeuge können beispielsweise von im Reaktorinnenraum befindlichen Personen manuell über das Schienensystem gezogen werden. Alternativ ist auch ein automatischer, beispielsweise elektrischer Betrieb der Schienenfahrzeuge möglich. Dabei könnte der Antrieb entweder in den Schienenfahrzeugen integriert sein oder ist in den Schienen selbst integriert, wie z.B. in dem linearen Transport System Beckhoff XTS.

Gemäß einer weiteren Ausführungsform eines erfindungsgemäßen Beladungssystems können die Schläuche im Querschnitt zusammendrückbar sein. Beispielsweise können die Schläuche aus thermoplastischen, flexiblen Polymeren, wie beispielsweise Polyurethan bestehen oder diese Polymere umfassen. Insbesondere können Flachschläuche verwendet werden, die vorteilhaft keine Metall- oder Kunststoffspiralen aufweisen und damit besonders flexibel sind. Durch die im Querschnitt zusammendrückbaren Schläuche ist es möglich, die Schläuche auch durch im Innenraum des Reaktors vorhandene Zwischenräume, beispielsweise zwischen evolventen-förmigen Kanalsystemen, hindurchzuführen und somit auch unter beengten Verhältnissen eine zuverlässige Beladung des Reaktors mit Schüttgut über die Schläuche zu gewährleisten.

Weiterhin können die Schläuche eine Länge von zumindest 1 m, bevorzugt zumindest 2 m, weiter bevorzugt im Bereich von 2 m bis 3 m, am bevorzugtesten im Bereich von 2,4 bis 2,7 m aufweisen. Die optimale Schlauchlänge ist abhängig von der Reaktorgeometrie und beträgt ca. 1/3 - 1/2 der gesamten Reaktorhöhe.

Viele Reaktoren, beispielsweise herkömmliche Reaktoren zur Methanolsynthese weisen eine Höhe zwischen 7 bis 10 m auf. Schläuche mit der oben genannten Länge erlauben es besonders einfach über die Füllstationen in die Schläuche eingebrachtes Schüttgut während des Transports durch die Schläuche abzubremsen und diese Reaktoren über einen Großteil ihrer Höhe zu befüllen ohne das Schüttgut zu beschädigen. In die Füllstationen eingebrachtes Schüttgut rutscht durch die Schläuche und wird dadurch abgebremst, so dass Beschädigungen am Reaktor oder Schüttgut vermieden werden, wenn das Schüttgut auf den Reaktorboden fällt.

Die Füllstationen sind vorteilhafterweise zumindest im Inneren trichterförmig ausgestaltet, um besonders gut ein Abrutschen des Schüttguts von der Füllstation in den Schlauch zu gewährleisten. Am unteren Ende kann der Schlauch montiert sein, der das Schüttgut dann weiter in den Reaktor transportiert. Die äußere Form der Füllstationen kann beliebig, z.B. quaderförmig oder zylindrisch sein.

Bei einer weiteren Ausführungsform eines erfindungsgemäßen Beladungssystems sind die Schläuche lösbar an den Füllstationen befestigt. Dies kann beispielsweise mittels lösbarer Klemmen erfolgen. Wenn der Beladungsvorgang fast beendet ist und eine bestimmte Füllhöhe bereits erreicht wurde, ist der Schlauch eher hinderlich, sodass dieser dann besonders einfach von der Füllstation demontiert werden kann und danach weiteres Schüttgut über die Füllstation ohne Schlauch direkt eingebracht werden kann, wobei neu eingefülltes Schüttgut durch bereits im Reaktor befindliches Schüttgut abgebremst und so eine mechanische Beschädigung des Schüttguts vermieden wird. Dies ist dann besonders vorteilhaft, wenn der Reaktor auf eine Höhe befüllt werden soll, die sich knapp unterhalb der Höhe befindet, auf der sich die Füllstationen im Reaktor befinden.

Die Schläuche können einen Durchmesser im Bereich von 30 bis 80 mm, vorzugsweise 40 bis 70 mm, weiter bevorzugt im Bereich von 45 bis 55 mm aufweisen. Schläuche mit diesen Durchmessern können besonders einfach eingesetzt werden, um das Schüttgut auch durch im Innenraum des Reaktors befindliche Zwischenräume, beispielsweise zwischen evolventen-förmigen Kanalsystemen, in den Reaktorinnenraum zu bringen.

Gemäß einer weiteren vorteilhaften Variante eines erfindungsgemäßen Beladungssystems weisen die Bestandteile des Systems, insbesondere die Schienensegmente, die Füllstationen, Behälter und Schienenfahrzeuge jeweils einen Querschnitt im zerlegten Zustand auf, der maximal 100 cm, bevorzugt maximal 80 cm, weiter bevorzugt maximal 60 cm beträgt. Die Größe des Querschnitts der zerlegten Bestandteile kann insbesondere im Bereich von 30 cm bis 60 cm liegen Die zerlegten Bestandteile eines derartigen Systems können besonders einfach durch ein Mannloch, das häufig nur einen kleinen Öffnungsquerschnitt aufweist, in den Innenraum des Reaktors gebracht werden. In diesen Fall ist es nicht notwendig, bei der Montage des Schienensystems noch Teile der Reaktorwand zu demontieren, um einen Zugang zum Inneren des Reaktors zu erhalten.

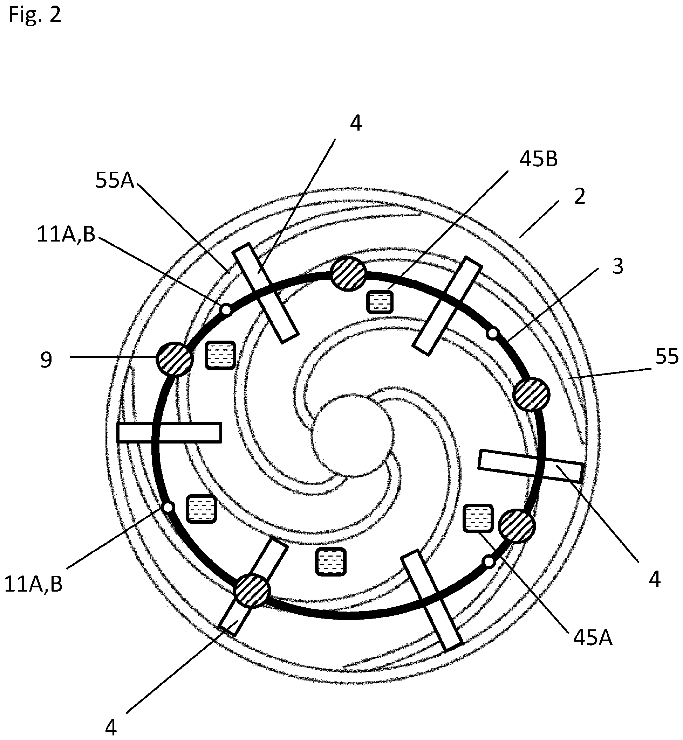

Weiterhin ist es vorteilhaft, wenn die Füllstationen jeweils eine Vorrichtung zur Fixierung der Füllstation im Reaktor aufweisen. Eine derartige Vorrichtung sorgt dafür, dass sich während des Befüllvorgangs die Füllstationen nicht bewegen oder umfallen. Die Fixierungsvorrichtung können beispielsweise Zapfen sein, die an den Füllstationen angebracht sind und die es ermöglichen diese in Zwischenräumen zwischen evolventen-förmigen Kanalsystemen im Reaktorinnenraum, wie sie in Figur 2 schematisch dargestellt sind, zu fixieren. Diese Zapfen ermöglichen es auch besonders einfach während des Befüllvorgangs die Füllstationen herauszunehmen, wenn eine bestimmte Füllhöhe erreicht ist, dann den lösbar vorhandenen Schlauch zu entfernen und schließlich den Befüllvorgang ohne Schlauch fortzusetzen. Die Fixierungsvorrichtungen können beispielsweise auch lösbare Stäbe sein, die zwischen das evolventen-förmige Kanalsystem eingeführt werden können. Denkbar sind auch Klemmen, die zur Befestigung der Füllstationen eingesetzt werden können. Diese Klemmen können insbesondere verwendet werden, um die Füllstationen an Boxen im oberen Bereich des evolventen-förmigen Kanalsystems zu klemmen. Alternativ oder zusätzlich können auch Magnete vorhanden sein, die Füllstationen aus Metall an dem evolventen-förmigen Kanalsystem fixieren.

Eine weitere Variante eines erfindungsgemäßen Beladungssystems kann Behälter zur Aufnahme des Schüttguts aufweisen, die im Boden Schläuche zum Transport des Schüttguts zu den Füllstationen aufweisen. Derartige Schläuche können besonders vorteilhaft einen Transport des Schüttguts von den Behältern zu den Füllstationen mittels Schwerkraft ermöglichen, wenn die Füllstationen unterhalb der Behälter positioniert sind.

Gegenstand der vorliegenden Erfindung ist auch ein Verfahren zum Beladen eines Reaktors mit einem einen unteren und einen oberen Reaktorbereich mit Schüttgut unter Verwendung des bereits beschriebenen Beladungssystems, wobei das Verfahren die Verfahrensschritte aufweist:
(A) Einbringen der zerlegten Bestandteile des Beladungssystems in den Reaktor,
(B) Montieren des Schienensystems im Reaktor, als ein im oberen Bereich des Reaktors um den Mittelpunkt des Reaktors umlaufendes, in sich geschlossenes Schienensystem und Montieren der Füllstationen benachbart zu dem Schienensystem,
(C) Einbringen des Schüttguts in den Reaktor und Transportieren der optional farblich markierten Behälter mit dem Schüttgut über das zumindest eine Schienenfahrzeug auf dem Schienensystem zu den Füllstationen,
(D) Transferieren des Schüttgutes aus den Behältern in die optional farblich markierten Füllstationen und Befüllen des Reaktors durch Befördern des Schüttguts über die Schläuche in den unteren Reaktorbereich, und
(E) Gegebenenfalls Demontieren und Zerlegen des Beladungssystems und Heraustransportieren der zerlegten Bestandteile des Beladungssystems aus dem Reaktor.

Ein solches Verfahren ermöglicht es mit relativ geringem Kraftaufwand das Schüttgut in unterschiedlichen auch schwer zugänglichen Bereichen des Reaktors zu verteilen. Eine Montage des Beladungssystems im oberen Reaktorbereich ermöglicht es besonders einfach über Schwerkraft den unteren Reaktorbereich zu befüllen, wobei die Schläuche das Schüttgut abbremsen und somit ein Einbringen des Schüttguts in den unteren Reaktorbereich ohne Beschädigungen ermöglichen.

Nach dem Verfahrensschritt (E) kann dann der Reaktor in Betrieb genommen werden. Daher eignet sich das erfindungsgemäße Verfahren besonders gut dazu, als Schüttgut Katalysatormaterial, beispielsweise in Form von Pellets in den Reaktorinnenraum zu bringen. Da das Katalysatormaterial während des Betriebs des Reaktors typischerweise für lange Zeit im Reaktor verbleibt, kann der Reaktor anschließend über einen langen Zeitraum, zum Beispiel für mehrere Jahre betrieben werden, ohne dass ein Austausch des Schüttguts notwendig ist.

Gemäß einer Weiterbildung eines vorteilhaften erfindungsgemäßen Verfahrens umfasst das Beladungssystem eine Vielzahl von Behältern und eine Vielzahl von Füllstationen, wobei Markierungen zur Kennzeichnung jeweils einer Füllstation und zumindest eines der Füllstation zugeordneten Behälters vorhanden sind. In den Verfahrensschritten (C) und (D) wird dann zuverlässig ein Behälter über das Schienensystem zu der Füllstation gebracht, der er zugeordnet ist und dann das Schüttgut in diese Füllstation geschüttet. Ein derartiges Markierungssystem ermöglicht es auch unter beengten Bedingungen und schlechten Lichtverhältnissen, zuverlässig die jeweils einer bestimmten Füllstation zugeordneten Behälter zu identifizieren und zur jeweiligen Füllstation zu bringen. Dies gewährleistet eine zuverlässige gleichmäßige Beladung des Schüttguts im Reaktorinnenraum.

Mehrere Behälter können einer Füllstation zugeordnet werden, wobei im Verfahrensschritt (D) diese Vielzahl an Behältern zu der Füllstation gebracht wird und gegen Ende des Befüllvorgangs der Schlauch von der Füllstation entfernt und anschließend der Füllvorgang ohne den dann hinderlichen Schlauch fortgesetzt wird.

Bei einer weiteren Variante eines erfindungsgemäßen Verfahrens weist der Reaktor im oberen Bereich evolventen-förmige Kanäle auf, wobei im Verfahrensschritt (D) das Schüttgut zwischen diesen Kanälen durch die Schläuche aus den Füllstationen in den Reaktor eingefüllt wird. Die Füllstationen können dann auch auf den evolventen-förmigen Kanälen positioniert werden. Die flexibel verformbaren Schläuche erlauben es besonders einfach auch bei beengten Verhältnissen durch die Zwischenräume zwischen diesen Kanälen hindurch das Schüttgut in den Reaktorinnenraum zu bringen.

Der Reaktor kann im oberen Bereich ein Mannloch mit einem Öffnungsquerschnitt aufweisen, wobei im Verfahrensschritt (A) die zerlegten Bestandteile des Beladungssystems besonders einfach durch das Mannloch hindurch in den Reaktor gebracht werden. Dabei weisen die Bestandteile des Systems, insbesondere die Schienensegmente, jeweils im zerlegten Zustand einen Querschnitt auf, der kleiner ist als der Öffnungsquerschnitt des Mannlochs. Auch die weiteren Komponenten des Beladungssystems, wie die Behälter, Schienenfahrzeuge und die Füllstationen weisen einen Querschnitt auf, der kleiner ist als der Öffnungsquerschnitt des Mannlochs. Bei einem derartigen Verfahren ist es besonders einfach, die zerlegten Bestandteile des Beladungssystems in den Reaktorinnenraum zu bringen, ohne dass die Notwendigkeit besteht, Teile der Reaktorhülle zu zerlegen.

Weiterhin ist es bei einem erfindungsgemäßen Verfahren vorteilhaft, wenn eine Vielzahl von Schienenfahrzeugen vorhanden sind und in den Verfahrensschritten (C) und (D) das Schuttgut kontinuierlich mittels dieser Vielzahl von Schienenfahrzeugen in den Füllstationen verteilt wird. Ein derartiges Verfahren erlaubt es besonders einfach und zeitsparend innerhalb kürzester Zeit eine große Menge an Schüttgut zuverlässig in den Reaktorinnenraum zu bringen.

Im Folgenden soll die Erfindung anhand von Ausführungsbeispielen und Figuren noch näher erläutert werden. Es zeigen:
Figur 1 zeigt einen Längsschnitt durch einen Reaktor, in dem ein erfindungsgemäßes Beladungssystem montiert ist.
Figur 2 zeigt einen Querschnitt durch den Reaktor der Figur 1 entlang der mit 7 bezeichneten Linie.
Figur 3 zeigt ein Beispiel einer Füllstation eines erfindungsgemäßen Beladungssystems außerhalb des Reaktors.
Figur 4 zeigt einen perspektivischen und schematischen Ausschnitt aus einem Schienensystem, auf dem Schienenfahrzeuge und Behälter zum Transport des Schüttguts montiert sind.
Figur 5 zeigt ein Befestigungssystem mit einem Bügel, um das Schienensystem an z.B. Kühlrohren im Reaktor zu befestigen.
Figuren 6A und 6B zeigen, wie zwei Schienensegmente über Befestigungsmittel miteinander verbunden werden können.
Figur 7 zeigt im Querschnitt eine Anordnung von verschiedenen Füllstationen im Innenbereich eines Reaktors.

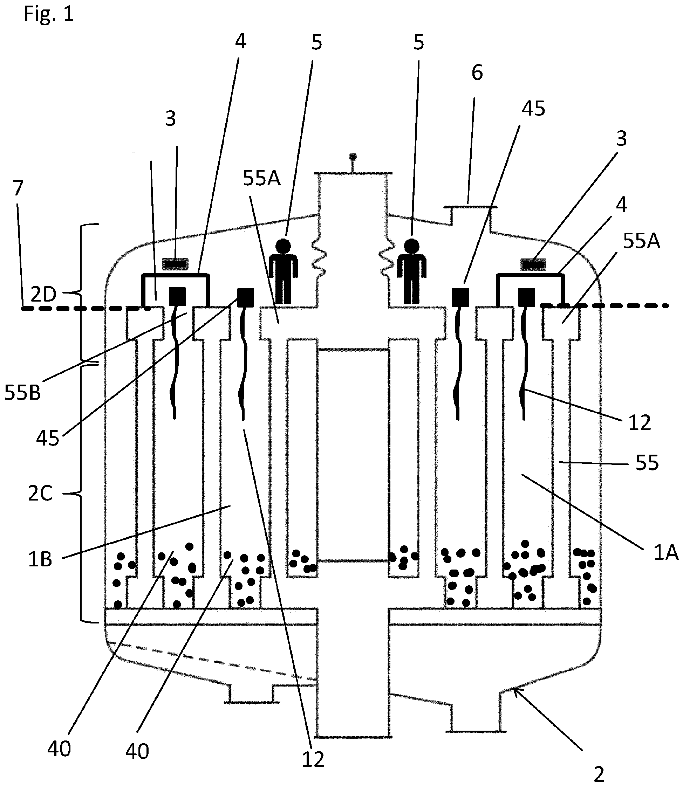

Figur 1 zeigt schematisch einen Längsschnitt durch einen Reaktor (2) in dem ein erfindungsgemäßes Beladungssystem montiert ist. Dieses Beladungssystem umfasst ein Schienensystem (3), das im Querschnitt gezeigt ist und das auf einem Gerüstsystem (4) aufgebracht ist. Im Reaktorinnenraum befindliche Personen (5) stehen auf den Kanalsystemen, d. h. den Verteilungskammern (55A), die mit den Kühlrohren (55) im Reaktorinnenraum verbunden sind. Das Beladungssystem kann im zerlegten Zustand durch ein Mannloch (6) in der Reaktorwand in das Innere des Reaktors gebracht werden. Füllstationen (45) sind auf den Verteilungskammern (55A) montiert, wobei Schläuche (12) ausgehend von den Füllstationen (45) durch Zwischenräume (55B) zwischen den Verteilungskammern (55A) in das Reaktorinnere eingeführt sind. Diese Schläuche baumeln zu Beginn des Beladungsvorgangs frei im Reaktorinnenraum und bremsen das Schüttgut beim Durchrutschen ab. Das Beladungssystem befindet sich im oberen Bereich (2D) des Reaktors (2). Im Reaktorinnenraum befindliche Personen (5) können manuell die Schienenfahrzeuge mit den das Schüttgut enthaltenden Behältern, die hier aus Gründen der Übersichtlichkeit nicht dargestellt sind, über das Schienensystem (3) zu den Füllstationen (45) transportieren und dann die Behälter in die jeweils ihnen zugeordneten Füllstationen entleeren. Das Schüttgut rutscht vom oberen Bereich des Reaktors durch die Schläuche (12) in den unteren Bereich (2C) des Reaktors.

Während des Betriebs können die Schläuche (12) von den Füllstationen (45) entfernt werden, wenn bereits eine bestimmte Füllhöhe des Schüttguts (40) erreicht wurde und anschließend wird der Befüllvorgang durch die Füllstation (45) hindurch direkt in verschiedene Innenräume (1A) und (1B) des Reaktors fortgesetzt.

Als Schüttgut kann Katalysatormaterial, vorzugsweise in der Form von Pellets, beispielsweise Katalysatortabletten verwendet werden.

Figur 2 zeigt einen Querschnitt durch den in der Figur 1 gezeigten Reaktor (2) entlang der mit (7) bezeichneten Linie. Oberhalb dieser Linie verläuft das Schienensystem (3), auf dem Schienenfahrzeuge (9) beweglich montiert sind, im vorliegenden Fall fünf Schienenfahrzeuge, wobei eine größere Anzahl von Schienenfahrzeugen (9), beispielsweise 12 oder noch mehr betrieben werden können. Aus Gründen der Übersichtlichkeit sind die auf den Schienenfahrzeugen vorhandenen Behälter nicht gezeigt. Oberhalb der Linie (7) in Figur 1 befindet sich auch das Gerüstsystem (4), auf dem das Schienensystem (3) montiert ist. Auf Höhe der Linie (7) verlaufen die evolventenförmigen Kanalsystemen, d.h. den evolventenförmigen Verteilungskammern (55A), wobei der Abstand zwischen benachbarten Verteilungskammern wesentlich kleiner sein kann als dargestellt. Zwischen den Verteilungskammern sind unterschiedliche Füllstationen (45A, 45B) in der Nähe des Schienensystems (3) montiert. Figur 2 zeigt, dass das Schienensystem (3) aus unterschiedlichen Schienensegmenten auf dem Gerüstsystem (4) mittels der Befestigungsmittel (11A, 11B) zusammengebaut wurde.

Bei manchen Befüllungsvorgängen kann auf das Gerüstsystem (4) oder bereits im Reaktorinnenraum vorhandene Befestigungsmöglichkeiten verzichtet werden. In diesem Fall kann das Schienensystem (3) direkt auf den Verteilungskammern montiert bzw. gelegt werden.

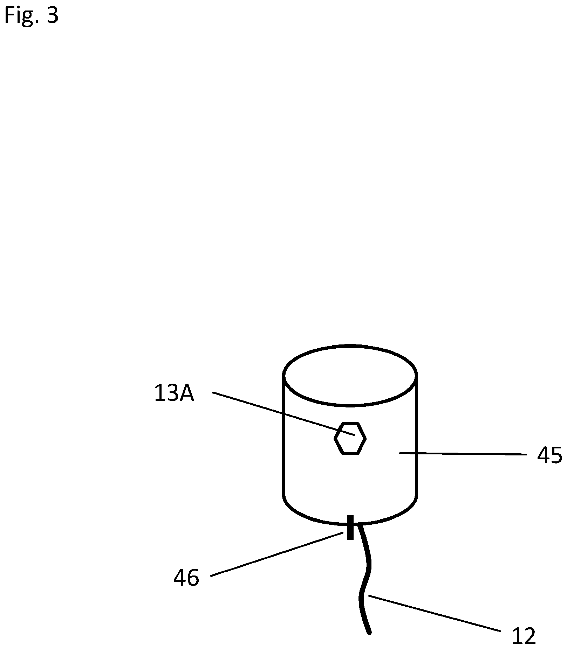

Figur 3 zeigt ein Beispiel für eine Füllstation (45), das eine Fixierungsvorrichtung in Form eines Zapfens (46) aufweist. Der Zapfen (46) wird in die Zwischenräume (55B) zwischen den Verteilungskammern (55A) im Reaktor gesteckt und dient zur Positionierung der Füllstation. An der gegenüberliegenden Seite der Füllstation ist eine weitere Fixierungsvorrichtung (46) als zweiter Zapfen vorhanden (In Fig. 3 nicht zu sehen). Unterhalb der Füllstation (45) ist der Schlauch (12) zu erkennen, der im Reaktor zwischen den Verteilungskammern hindurchgeführt wird und durch den das Schüttgut in den Reaktor eingebracht wird. Die Füllstation weist weiterhin noch eine Markierung (13A) auf, die dazu dient, die Füllstation zu kennzeichnen und während des Beladungsvorgangs eine zuverlässige Zuordnung von entsprechend gekennzeichneten Behältern zu dieser Füllstation erlaubt.

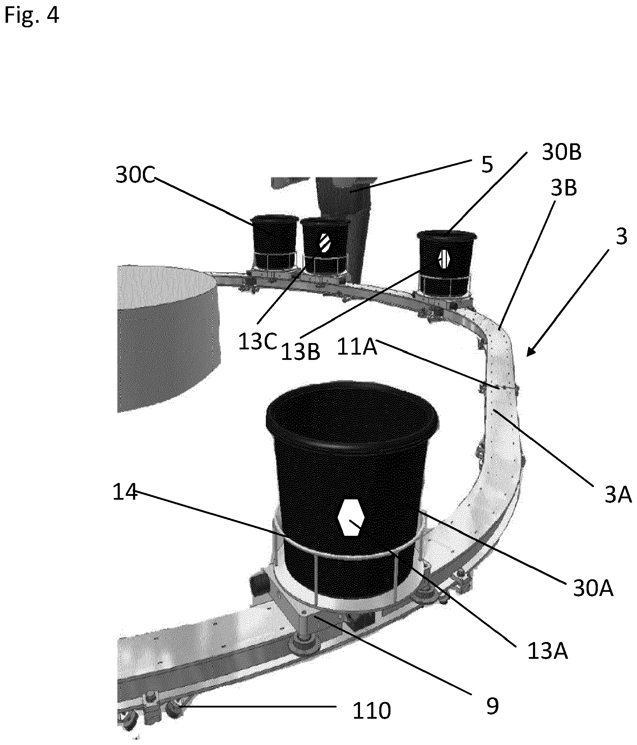

Figur 4 zeigt einen perspektivischen und schematischen Ausschnitt aus einem erfindungsgemäßen Schienensystem (3), dass aus verschiedenen Schienensegmenten (3A) und (3B) mittels der Befestigungsmittel in Form von Schrauben (11A) zusammengebaut ist. Auf dem Schienensystem (3) befinden sich Schienenfahrzeuge (9), die Haltevorrichtungen (14) in Form von Körben für die Behälter (30A), (30B) und (30C) für das Schüttgut aufweisen. Diese Behälter sind mit unterschiedlichen Markierungen (13A), (13B) und (13C) versehen, die es erlauben, diese Behälter unterschiedlichen Füllstationen zuzuordnen. Schematisch ist ebenso ein Teil einer Person (5) gezeigt, die die Schienenfahrzeuge (9) über das Schienensystem (3) ziehen kann und die Eimer in die dafür vorgesehenen jeweiligen Füllstationen entleeren kann. In Figur 4 ist noch eine Auflage (110) für Rohre zu erkennen, die ein Teil eines Befestigungssystems (115) zur Befestigung des Schienensystems (3) auf einer Befestigungsmöglichkeit im Innenraum des Reaktors, wie z.B. einem Gerüstsystem (4) sind.

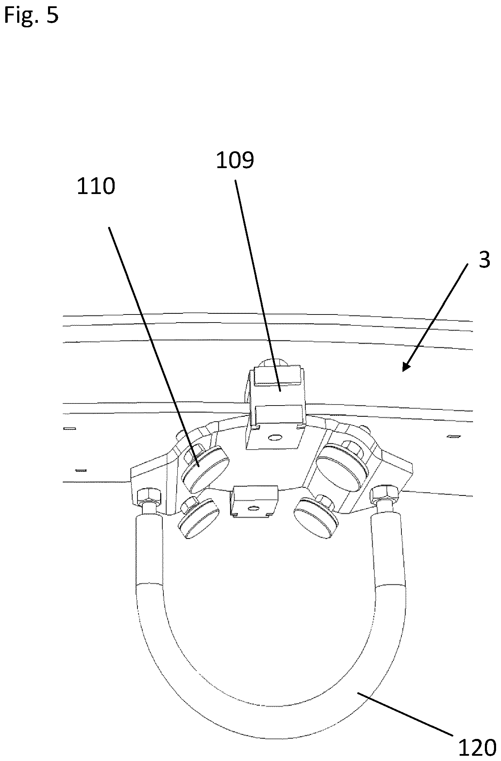

Figur 5 zeigt das Befestigungssystem (115), dessen Auflage (110) in Figur 4 zu sehen ist. Die Auflage ist mittels einer Klemme (109) am Schienensystem (3) befestigt. Ein Bügel (120) kann mit der Auflage verschraubt werden und umschließt im montierten Zustand das Rohrsystem des Reaktors, in dem das Schienensystem montiert wird.

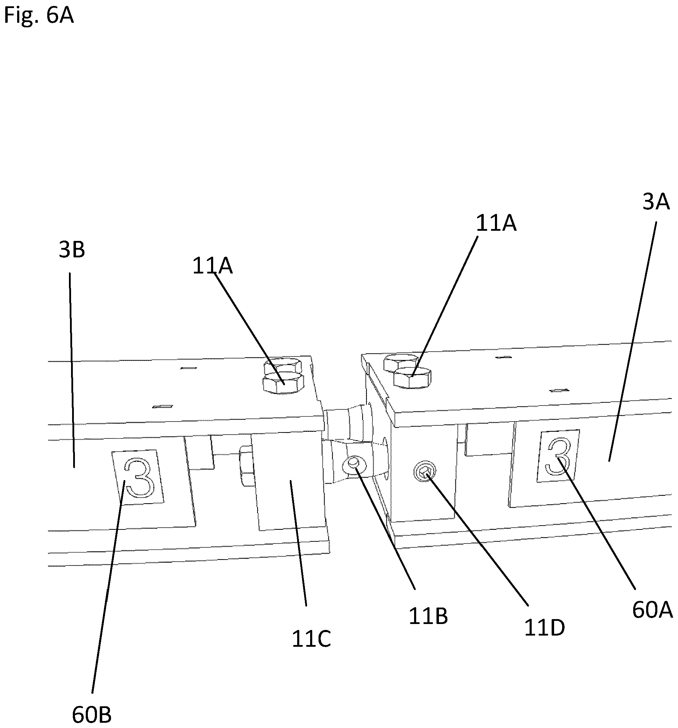

Figur 6A zeigt zwei Schienensegmente (3A) und (3B) eines erfindungsgemäßen Schienensystems während des Zusammenbaus. Jedes Schienensegment (3A) und (3B) weist einen Klotz (11C) auf, in dem je ein Stift (11B) fest montiert ist. Die Klötze sind durch Schrauben (11A) mit dem Schienensegment (3A) bzw. (3B) verbunden. Die zwei Stifte (11B) werden in die Klötze (11C) des jeweils anderen Schienensegments (3A) oder (3B) gesteckt und mittels zweier Madenschrauben (11D), die in die Klötze des Schienensegments (3A) und (3B) geschraubt werden, fixiert. Dieses Stecksystem erlaubt eine leichte Montage und Demontage des Schienensystems.

Beide Schienensegmente (3A) und (3B) weisen Markierungen (60A) und (60B) auf, die im vorliegenden Fall Beschriftungen mit der Nummerierung 3 sind und die es besonders einfach erlauben, unter beengten Verhältnissen im Reaktorinneren zuverlässig die richtigen Schienensegmente ineinander zu stecken und miteinander zu verschrauben.

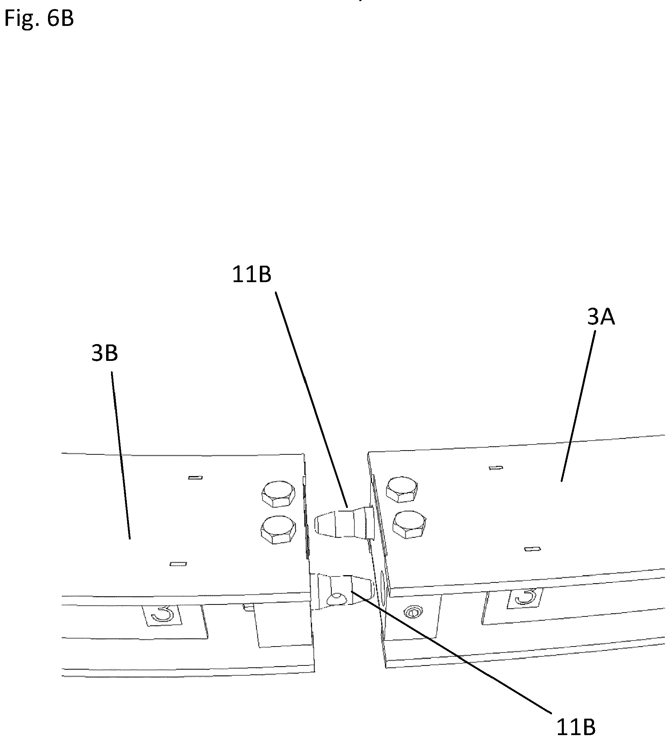

Figur 6B zeigt die zwei Schienensegmente (3A) und (3B) der Figur 6A aus etwas anderer Perspektive, so dass die beiden Stifte (11B) besser zu sehen sind.

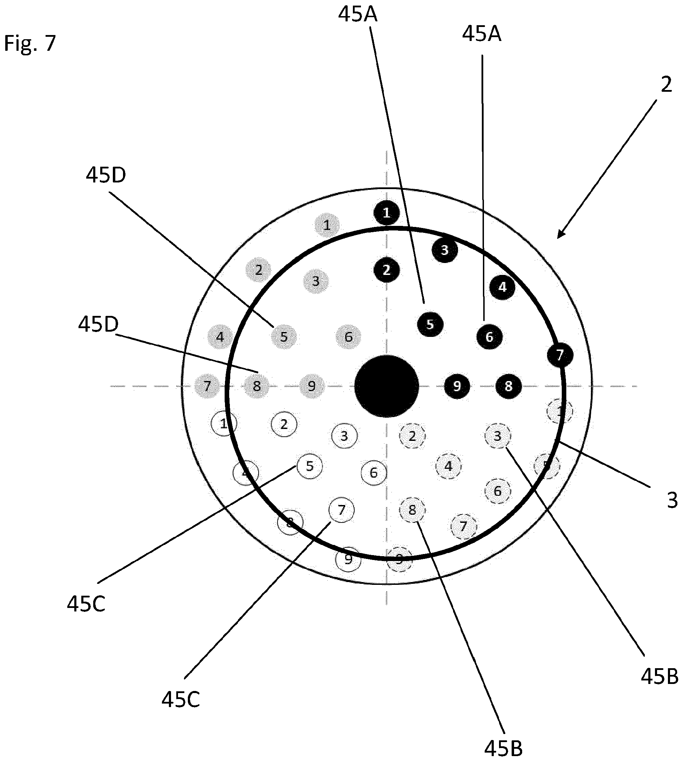

Figur 7 zeigt schematisch einen Querschnitt durch einen Reaktor (2), der die Anordnung verschiedener Füllstationen (45A), (45B), (45C) und (45D) zeigt. Im vorliegenden Fall wird zur Markierung der Füllstationen und der ihnen zugeordneten Behälter eine Kombination einer Farbkodierung (hier nicht dargestellt) und einer Nummerierung verwendet. Im vorliegenden Fall ist der Querschnitt des Reaktors in vier Quadranten aufgeteilt, wobei jeweils neun Füllstationen vorhanden sind, die die gleiche Farbe aufweisen aber jeweils eine andere Nummerierung 1 bis 9. Das Schienensystem (3) ist schematisch angedeutet. Auf dem Schienensystem sind Schienenfahrzeuge mit den Eimern mit den entsprechenden Farben und einer entsprechenden Nummerierung vorhanden. Die Schienenfahrzeuge werden immer in die gleiche Richtung entweder im oder gegen den Uhrzeigersinn bewegt und dann in jedem Quadranten die gleiche Katalysatormenge geladen. Durch die gleichmäßige Verteilung der Füllstationen wird in jedem Quadranten eine gleichmäßige Beladung mit Schüttgut erreicht.

## Patentansprüche

1. Demontierbares und zerlegbares Beladungssystem (1) zum Beladen eines Reaktors (2) mit Schüttgut (40), umfassend:
(a) ein zerlegbares Schienensystem (3) mit einer Vielzahl von Schienensegmenten (3A, 3B), die miteinander zu einem in sich geschlossenen Schienensystem 3 verbunden werden können, wobei die einzelnen Schienensegmente (3A, 3B) Befestigungsmittel (11A, 11B, 11C, 11D) zum Verbinden der Schienensegmente miteinander aufweisen.
(b) zumindest ein Schienenfahrzeug (9) zum Betrieb auf dem Schienensystem (3) mit einer Haltevorrichtung (14) für Behälter (30) zur Aufnahme des Schüttguts (40), und
(c) mindestens eine Füllstation (45A, 45B, 45C, 45D) zur Aufnahme des Schüttguts (40) mit einem im Boden der Füllstation vorhandenen Schlauch (12) zum Transport des Schüttguts (40) in verschiedene Bereiche (2A, 2B) des Reaktors (2).

2. Beladungssystem nach Anspruch 1, wobei die Schienensegmente (3A, 3B) Markierungen (60A, 60B) zum Zusammenbau des Schienensystems (3) aufweisen.

3. Beladungssystem nach einem der Ansprüche 1 oder 2, wobei die Schläuche (12) bevorzugt im Querschnitt zusammendrückbar sind.

4. Beladungssystem nach einem der Ansprüche 1, 2 oder 3, wobei die Schläuche (12) eine Länge von zumindest 1 m, bevorzugt zumindest 2 m, weiter bevorzugt im Bereich von 2 bis 3 m, am bevorzugtesten im Bereich von 2,4 bis 2,7 m aufweisen.

5. Beladungssystem nach einem der Ansprüche 1 bis 4, wobei die Schläuche (12) lösbar an den Füllstationen (45A, 45B, 45C, 45D) befestigt sind.

6. Beladungssystem nach einem der Ansprüche 1 bis 5, wobei die Schläuche (12) einen Durchmesser im Bereich von 30 bis 80 mm, bevorzugt 40 bis 70 mm, weiter bevorzugt im Bereich von 45 bis 55 mm aufweisen.

7. Beladungssystem nach einem der Ansprüche 1 bis 6, wobei die Bestandteile des Systems, insbesondere die Schienensegmente (3A, 3B) jeweils einen Querschnitt im zerlegten Zustand aufweisen, der maximal 100 cm, bevorzugt maximal 80 cm, weiter bevorzugt maximal 60 cm beträgt.

8. Beladungssystem nach einem der Ansprüche 1 bis 7, wobei die Füllstationen (45A, 45B, 45C, 45D) jeweils eine Vorrichtung (46) zur Fixierung im Reaktor (2) aufweisen.

9. Beladungssystem nach einem der Ansprüche 1 bis 8, wobei die Behälter zur Aufnahme des Schüttguts im Boden Schläuche zum Transport des Schüttguts zu den Füllstationen aufweisen.

10. Beladungssystem nach einem der Ansprüche 1 bis 9, wobei eine Vielzahl von Schienenfahrzeugen zum gleichzeitigen Betrieb auf dem Schienensystem vorhanden sind.

11. Verfahren zum Beladen eines Reaktors (2) mit Schüttgut (40), wobei der Reaktor (2) einen unteren (2C) und einem oberen (2D) Reaktorbereich aufweist, unter Verwendung eines Beladungssystems (1) nach einem der Ansprüche 1 bis 10, mit den Verfahrensschritten:
(A) Einbringen der zerlegten Bestandteile des Beladungssystems (1) in den Reaktor (2),
(B) Montieren des Schienensystems (3) im Reaktor (2) als ein im oberen Bereich (2D) des Reaktors um den Mittelpunkt des Reaktors umlaufendes, in sich geschlossenes Schienensystem und Montieren der zumindest einen Füllstation (45A, 45B, 45C, 45D) benachbart zu dem Schienensystem (3),
(C) Einbringen des Schüttguts (40) in den Reaktor (2) und Transportieren der Behälter mit dem Schüttgut über das zumindest eine Schienenfahrzeug (9) auf dem Schienensystem (3) zu der zumindest einen Füllstation (45A, 45B, 45C, 45D),
(D) Transferieren des Schüttgutes aus den Behältern in die zumindest eine Füllstation (45A, 45B, 45C, 45D) und Befüllen des Reaktors (2) durch Befördern des Schüttguts über die Schläuche (12) in den unteren Reaktorbereich (2C), und
(E) gegebenenfalls Demontieren und Zerlegen des Beladungssystems und Heraustransportieren der zerlegten Bestandteile aus dem Reaktor (2).

12. Verfahren nach Anspruch 11, wobei das Beladungssystem eine Vielzahl von Behältern (30A, 30B, 30C) und eine Vielzahl von Füllstationen (45A, 45B, 45C, 45D) umfasst, und auf der Vielzahl der Behälter und der Vielzahl der Füllstationen (45A, 45B, 45C, 45D) Markierungen (61A, 61 B) zur Kennzeichnung jeweils einer Füllstation und zumindest einem der Füllstation zugeordneten Behälter vorhanden sind und wobei in den Verfahrensschritten (C) und (D) ein einer bestimmten Füllstation zugeordneter Behälter zu dieser Füllstation über das Schienensystem transportiert und das Schüttgut in diese Füllstation geschüttet wird.

13. Verfahren nach Anspruch 12, wobei im Verfahrensschritt (D) mehrere Behälter einer Füllstation zugeordnet sind und wobei gegen Ende des Befüllvorgangs der Schlauch von der Füllstation entfernt wird.

14. Verfahren nach einem der Ansprüche 12 oder 13, wobei der Reaktor in dessen oberen Bereich evolventen-förmige Kanäle aufweist und im Verfahrensschritt (D) das Schüttgut zwischen den Kanälen durch die Schläuche aus den Füllstationen in den Reaktor eingefüllt wird.

15. Verfahren nach einem der Ansprüche 12, 13 oder 14, wobei der Reaktor im oberen Bereich ein Mannloch mit einem Öffnungsquerschnitt aufweist, und im Verfahrensschritt (A) die zerlegten Bestandteile des Beladungssystems durch das Mannloch hindurch in den Reaktor eingebracht werden, wobei die Bestandteile des Systems, insbesondere die Schienensegmente jeweils einen Querschnitt im zerlegten Zustand aufweisen, der kleiner ist als der Öffnungsquerschnitt des Mannlochs.

16. Verfahren nach einem der Ansprüche 12 bis 15, wobei eine Vielzahl von Schienenfahrzeugen vorhanden sind und in den Verfahrensschritten (C) und (D) kontinuierlich das Schüttgut mittels einer Vielzahl von Behältern in den Reaktor eingebracht und über die Schienenfahrzeuge in die Füllstationen verteilt wird.

17. Verfahren nach einem der Ansprüche 12 bis 16, wobei als Schüttgut Katalysatormaterial, vorzugsweise in der Form von Pellets verwendet wird.

## Claims

1. A dismountable and dismantlable loading system (1) for loading a reactor (2) with bulk material (40), comprising:
(a) a dismantlable rail system (3) with a multiplicity of rail segments (3A, 3B) which can be connected to one another to form a self-contained rail system 3, wherein the individual rail segments (3A, 3B) have attachment means (11A, 11B, 11C, 11D) for connecting the rail segments to one another,
(b) at least one rail vehicle (9) for operation on the rail system (3), having a holding device (14) for containers (30) for receiving the bulk material (40), and
(c) at least one filling station (45A, 45B, 45C, 45D) for receiving the bulk material (40), having a hose (12) present in the floor of the filling station for transporting the bulk material (40) into various areas (2A, 2B) of the reactor (2).

2. The loading system as claimed in claim 1, wherein the rail segments (3A, 3B) have markings (60A, 60B) for assembling the rail system (3).

3. The loading system as claimed in either of claims 1 or 2, wherein the hoses (12) are preferably compressible in cross section.

4. The loading system as claimed in one of claims 1, 2 or 3, wherein the hoses (12) have a length of at least 1 m, preferably at least 2 m, more preferably in the range of 2 to 3 m, most preferably in the range of 2.4 to 2.7 m.

5. The loading system as claimed in one of claims 1 to 4, wherein the hoses (12) are releasably attached to the filling stations (45A, 45B, 45C, 45D).

6. The loading system as claimed in one of claims 1 to 5, wherein the hoses (12) have a diameter in the range of 30 to 80 mm, preferably 40 to 70 mm, more preferably in the range of 45 to 55 mm.

7. The loading system as claimed in one of claims 1 to 6, wherein the constituent parts of the system, in particular the rail segments (3A, 3B), each have a cross section in the dismantled state that amounts to at most 100 cm, preferably at most 80 cm, more preferably at most 60 cm.

8. The loading system as claimed in one of claims 1 to 7, wherein the filling stations (45A, 45B, 45C, 45D) each have a device (46) for securing them in the reactor (2).

9. The loading system as claimed in one of claims 1 to 8, wherein the containers for receiving the bulk material have hoses in the floor for transporting the bulk material to the filling stations.

10. The loading system as claimed in one of claims 1 to 9, wherein a multiplicity of rail vehicles for simultaneous operation on the rail system are present.

11. A method for loading a reactor (2) with bulk material (40), wherein the reactor (2) has a lower (2C) and an upper (2D) reactor area, using a loading system (1) as claimed in one of claims 1 to 10, having the following method steps:
(A) introducing the dismantled constituent parts of the loading system (1) into the reactor (2),
(B) mounting the rail system (3) in the reactor (2) as a self-contained rail system running around the center of the reactor in the upper area (2D) of the reactor, and mounting the at least one filling station (45A, 45B, 45C, 45D) adjacent to the rail system (3),
(C) introducing the bulk material (40) into the reactor (2) and transporting the containers having the bulk material on the rail system (3) to the at least one filling station (45A, 45B, 45C, 45D) by way of the at least one rail vehicle (9),
(D) transferring the bulk material from the containers to the at least one filling station (45A, 45B, 45C, 45D) and filling the reactor (2) by conveying the bulk material into the lower reactor area (2C) via the hoses (12), and,
(E) if necessary, dismounting and dismantling the loading system and transporting the dismantled constituent parts out of the reactor (2).

12. The method as claimed in claim 11, wherein the loading system comprises a multiplicity of containers (30A, 30B, 30C) and a multiplicity of filling stations (45A, 45B, 45C, 45D), and markings (61A, 61B) for respectively identifying a filling station and at least one container assigned to the filling station are present on the multiplicity of containers and the multiplicity of filling stations (45A, 45B, 45C, 45D), and wherein, in method steps (C) and (D), a container assigned to a certain filling station is transported to this filling station via the rail system, and the bulk material is poured into this filling station.

13. The method as claimed in claim 12, wherein, in method step (D), a plurality of containers are assigned to a filling station and wherein, toward the end of the filling operation, the hose is removed from the filling station.

14. The method as claimed in either of claims 12 and 13, wherein the reactor has involute channels in its upper area, and the bulk material is introduced between the channels into the reactor from the filling stations through the hoses in method step (D).

15. The method as claimed in one of claims 12, 13 and 14, wherein the upper area of the reactor has a manhole with an opening cross section, and the dismantled constituent parts of the loading system are brought into the reactor through the manhole in method step (A), wherein the constituent parts of the system, in particular the rail segments, each have a cross section in the dismantled state which is smaller than the opening cross section of the manhole.

16. The method as claimed in one of claims 12 to 15, wherein a multiplicity of rail vehicles are present and in method steps (C) and (D) the bulk material is continuously introduced into the reactor by means of a multiplicity of containers and distributed in the filling stations via the rail vehicles.

17. The method as claimed in one of claims 12 to 16, wherein the bulk material used is catalyst material, preferably in the form of pellets.

## Revendications

1. Système de chargement démontable et décomposable (1) pour charger un réacteur (2) avec des matières en vrac (40), comprenant :
(a) un système de rails démontable (3) comprenant une pluralité de segments de rails (3A, 3B) qui peuvent être reliés entre eux pour former un système de rails 3 fermé sur lui-même, les différents segments de rails (3A, 3B) présentant des moyens de fixation (11A, 11B, 11C, 11D) pour relier les segments de rails entre eux.
(b) au moins un véhicule sur rails (9) destiné à fonctionner sur le système de rails (3) avec un dispositif de maintien (14) pour des conteneurs (30) destinés à recevoir le produit en vrac (40), et
(c) au moins un poste de remplissage (45A, 45B, 45C, 45D) pour recevoir le produit en vrac (40) avec un tuyau (12) présent dans le fond du poste de remplissage pour transporter le produit en vrac (40) dans différentes zones (2A, 2B) du réacteur (2).

2. Système de chargement selon la revendication 1, dans lequel les segments de rail (3A, 3B) présentent des marquages (60A, 60B) pour l'assemblage du système de rail (3).

3. Système de chargement selon l'une des revendications 1 ou 2, dans lequel les tuyaux (12) sont de préférence compressibles en section transversale.

4. Système de chargement selon l'une des revendications 1, 2 ou 3, dans lequel les tuyaux (12) ont une longueur d'au moins 1 m, de préférence d'au moins 2 m, plus préférentiellement de l'ordre de 2 à 3 m, le plus préférentiellement de l'ordre de 2,4 à 2,7 m.

5. Système de chargement selon l'une des revendications 1 à 4, dans lequel les tuyaux (12) sont fixés de manière amovible aux stations de remplissage (45A, 45B, 45C, 45D).

6. Système de chargement selon l'une des revendications 1 à 5, dans lequel les tuyaux (12) ont un diamètre compris entre 30 et 80 mm, de préférence entre 40 et 70 mm, plus préférentiellement entre 45 et 55 mm.

7. Système de chargement selon l'une des revendications 1 à 6, dans lequel les éléments constitutifs du système, notamment les segments de rail (3A, 3B), présentent chacun une section transversale à l'état démonté qui est au maximum de 100 cm, de préférence au maximum de 80 cm, de préférence encore au maximum de 60 cm.

8. Système de chargement selon l'une des revendications 1 à 7, dans lequel les stations de remplissage (45A, 45B, 45C, 45D) comportent chacune un dispositif (46) de fixation dans le réacteur (2).

9. Système de chargement selon l'une des revendications 1 à 8, dans lequel les conteneurs destinés à recevoir le produit en vrac dans le fond comportent des tuyaux pour le transport du produit en vrac vers les postes de remplissage.

10. Système de chargement selon l'une quelconque des revendications 1 à 9, dans lequel une pluralité de véhicules ferroviaires sont présents pour fonctionner simultanément sur le système de rails.

11. Procédé de chargement d'un réacteur (2) avec des matières en vrac (40), le réacteur (2) comprenant une zone de réacteur inférieure (2C) et une zone de réacteur supérieure (2D), en utilisant un système de chargement (1) selon l'une des revendications 1 à 10, comprenant les étapes de procédé suivantes :
(A) mise en place des éléments démontés du système de chargement (1) dans le réacteur (2),
(B) montage du système de rails (3) dans le réacteur (2) sous la forme d'un système de rails fermé sur lui-même et tournant autour du centre du réacteur dans la zone supérieure (2D) du réacteur, et montage de l'au moins un poste de remplissage (45A, 45B, 45C, 45D) à proximité du système de rails (3),
(C) introduction du produit en vrac (40) dans le réacteur (2) et transport des conteneurs avec le produit en vrac par l'intermédiaire du au moins un véhicule sur rails (9) sur le système de rails (3) vers le au moins un poste de remplissage (45A, 45B, 45C, 45D),
(D) transférer le produit en vrac des conteneurs à l'au moins un poste de remplissage (45A, 45B, 45C, 45D) et remplir le réacteur (2) en transportant le produit en vrac via les tuyaux (12) dans la zone inférieure du réacteur (2C), et
(E) le cas échéant, démonter et désassembler le système de chargement et transporter les composants désassemblés hors du réacteur (2).

12. Procédé selon la revendication 11, dans lequel le système de chargement comprend une pluralité de récipients (30A, 30B, 30C) et une pluralité de postes de remplissage (45A, 45B, 45C, 45D), et des marques (61A, 61 B) pour identifier respectivement un poste de remplissage et au moins un conteneur associé au poste de remplissage, et dans lequel, au cours des étapes (C) et (D) du procédé, un conteneur associé à un poste de remplissage déterminé est transporté vers ce poste de remplissage via le système de rails et le produit en vrac est déversé dans ce poste de remplissage.

13. Procédé selon la revendication 12, dans lequel, à l'étape (D) du procédé, plusieurs récipients sont affectés à un poste de remplissage et dans lequel, vers la fin du processus de remplissage, le tuyau est retiré du poste de remplissage.

14. Procédé selon l'une des revendications 12 ou 13, dans lequel le réacteur présente dans sa partie supérieure des canaux en forme de développante et dans lequel, à l'étape (D) du procédé, le produit en vrac est introduit dans le réacteur entre les canaux par les tuyaux provenant des stations de remplissage.

15. Procédé selon l'une des revendications 12, 13 ou 14, dans lequel le réacteur présente dans sa partie supérieure un trou d'homme avec une section d'ouverture, et dans l'étape (A) du procédé, les composants démontés du système de chargement sont introduits dans le réacteur à travers le trou d'homme, les composants du système, en particulier les segments de rail, présentant chacun une section à l'état démonté qui est inférieure à la section d'ouverture du trou d'homme.

16. Procédé selon l'une des revendications 12 à 15, dans lequel il y a une pluralité de véhicules sur rails et, dans les étapes (C) et (D) du procédé, le produit en vrac est introduit en continu dans le réacteur au moyen d'une pluralité de conteneurs et est distribué dans les stations de remplissage par l'intermédiaire des véhicules sur rails.

17. Procédé selon l'une des revendications 12 à 16, dans lequel on utilise comme produit en vrac un matériau catalyseur, de préférence sous forme de pellets.
